# EUROPEAN PATENT SPECIFICATION

(11) **EP 2 956 892 B1**
(45) Date of publication and mention of the grant of the patent: **28.06.2017**
(21) Application number: 14714322.6
(22) Date of filing: 13.02.2014
(51) Int. Cl.: G06K 19/06

(54) **SYSTEM AND METHOD FOR GENERATING ELEMENTS CONTAINING QUICK RESPONSE CODES**
SYSTEM UND VERFAHREN ZUR ERZEUGUNG VON ELEMENTEN MIT SCHNELLREAGIERENDEN CODES
SYSTÈME ET PROCÉDÉ POUR LA GÉNÉRATION D'ÉLÉMENTS CONTENANT DES CODES À BARRES 2D

(30) Priority: 15.02.2013 IT AN20130029
(43) Date of publication of application: 23.12.2015
(73) Proprietor: Soundreflections di Polzoni Andrea, 60015 Falconara Marittima (AN) (IT)
(72) Inventor: POLZONI, Andrea, I-60015 Falconara Marittima (AN) (IT)
(74) Representative: Premru, Rok
(86) International application number: PCT/IB2014/000147
(87) International publication number: WO 2014/125359

(56) References cited:
- US-A1- 2005 274 804
- US-B1- 8 308 067
- Anonymous: "Duke et Nissan lancent le 1er QR Code 3D : golem13", , 7 December 2012 (2012-12-07), XP055092672, Retrieved from the Internet: URL:http://golem13.fr/duke-et-nissan-lance nt-le-1er-qr-code-3d/ [retrieved on 2013-12-10]

## Description

The object of the present invention is a system for duplicating QR codes on three-dimensional target elements.

The invention falls within the sector of use of "Quick Response" codes (hereinafter referred to as "QR codes"), which have long been used in the fields of logistics and, especially, promotional, thanks to the greater flexibility of use and storage capacity of informational data compared to the standard bar codes (or similar identification systems).

In brief, the QR code consist of a two-dimensional matrix with square shape and white background, wherein a series of black modules, of various shapes and positions, are arranged: the succession of said black modules and white spaces of the matrix background defines a unique and characteristic code, to which corresponds a predetermined content, capable of disclosing any time the code is decoded by suitable reading instruments.

More precisely, a unique stored information corresponds to each QR code, capable of carrying out any communication and information content, starting from text messages, alphanumerical sequences, images, up to multimedia and websites links.

Considering that over 7,000 numeric characters and over 4,000 alphanumeric characters may be contained in a single QR code, it is clear that it is a highly customisable instrument in terms of information contained and coded therein. For a more exhaustive description of the operation and fundamental features of a QR code, reference should be made to patent JP 4258794 and to the corresponding document EP 0672994 held by Denso Wave Corp., which made public and usable with free licence this technology, which had long become an international standard (with initial diffusion in the Eastern countries and, more recently, in the rest of the world).

For a quicker understanding of the present invention, it is hereby sufficient to specify only some peculiarities underlying the QR code and its operation mechanism.

Both the writing and reading step of a QR code may be easily implemented by means of free software and instruments, capable of coding the desired information in the two-dimensional matrix, which can then be decoded by the dedicated software (the so-called "QR reader"), typically represented by a scanner adapted to recognise and read said code: said scanning software is natively present or installable in the most widespread smartphones and mobile phones.

In addition, an error detection and correction system (precisely, the so-called Reed-Solomon system) is implemented in each QR code, providing the code reader with the capability of correcting and recovering the wrong or missing QR code portions, up to about 30% of the coded information: this is very important in cases where the QR code matrix is partly damaged or missing for accidental or deliberate reasons: in this last case it is mainly for aesthetic reasons, where the intent is to artfully intervene on the original QR code in order to adapt it to marketing and/or artistic needs.

Despite the unlimited codability of the content storable in a QR code and the partial exterior modifiability allowed by the error correction system, the QR code has a certain rigidity in terms of aesthetic appeal and operation.

In fact, the QR code consists of, always and in any case, a black and white two-dimensional matrix, composed of repetitive and schematic geometrical elements (starting from the three large pointing squares placed at the corners), certainly of little aesthetic appeal, which could cause, a loss of interest in the use thereof within the promotional, information and commercial sector, over time.

Recently, there have been some examples of using the QR code with slightly different methods from the standard ones, although the end result does not substantially depart from the results already known in the field.

For example, the prior document US 2005/274804 is known, which describes a method for inserting two-dimensional elements into a standard QR code, without affecting the correct decoding of the information contained: such elements (typically consisting of words or advertising messages) overlap the code portions consisting of alternating black modules and white spaces of the QR code, such that the reading software is not at all affected by the presence of additional elements.

A further prior document, the US 8308067, on the other hand, describes a QR code, the geometrical elements thereof (representing alternating black modules and white spaces) consist of a plurality of physically tangible elements, capable of taking different height or spatial orientation relative to the lying plane.

More precisely, such document refers to an apparatus and relative system adapted to display a QR code in a three-dimensional form, said three-dimensionality being generated by the simple overelevation (or orientation), through mechanical methods, of a series of portions of the two-dimensional code: in conclusion, the final QR code still remains clearly attributable to the native two-dimensional QR code (the shape, dimension and colour thereof are not at all affected), however conferring it a further spatial dimension which may be used for marketing or recreational purposes.

A similar example, having promotional purposes only, may be found in the publicity for the car Nissan Juke Nismo, wherein the black modules and the white spaces of a QR code are used for creating a sort of city road journey, within which the car can fictitiously move.

In short, the black code modules are artfully overelevated in order to simulate the features of buildings, while the white spaces represent the roadway; moreover, some characteristic elements of an urban city are further added within the code, such as lights, trees, fountains, still in accordance to the native QR code and such as not to alter the original codability thereof: it is, therefore, an example of manipulation of a two-dimensional QR code in order to impart a three-dimensional layout thereto, in line with the purpose of the referenced promotional campaign (that is, obtaining a sort of urban journey for the publicised car); however, the end result is clearly comparable to the original QR code and the reading software scans it as a two-dimensional matrix composed of the typical and schematic geometrical elements of a standard QR code, in order to obtain the coding thereof.

The object of the present invention is to obviate this kind of drawbacks, by providing a procedure for duplicating the QR code and the consequent attainment of a coded target element, capable of overcoming the two-dimensional and aesthetic physical limits of the same QR code.

These and other objects, which shall appear clearly hereinafter, are achieved with a procedure for duplicating a QR code on a target element, according to claim 1.

Other objects can also be obtained through the additional features of the dependent claims.

Further features of the present invention shall be better highlighted by the following description of some preferred embodiments, in accordance with the patent claims and illustrated, by way of a non-limiting example, in the enclosed drawing tables, wherein:
- Fig. 1 shows a QR code, representing the starting element of the procedure according to an illustrative variant of the invention;
- Figs. 2 to 6 show the various steps of the procedure for duplicating a QR code on a target element, according to said first illustrative variant of the invention; more precisely, as shall be specified in detail hereinafter:

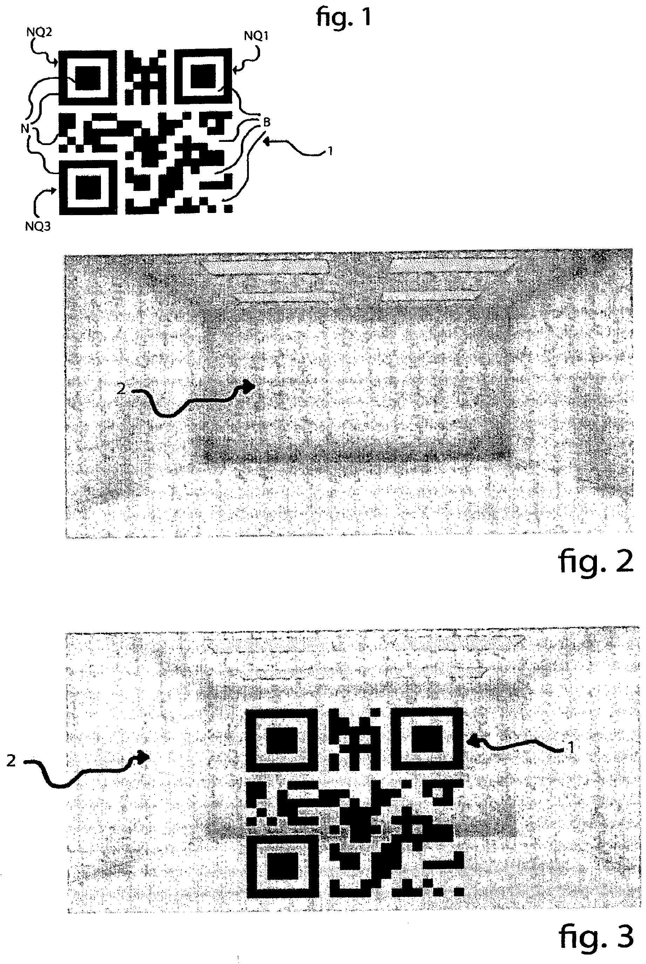

- Fig. 2 shows the (physical or virtual) space housing the target element whereon said QR code of fig. 1 may be duplicated;
- Figs. 3 to 5 illustrate intermediate steps of the reconstruction/reprocessing of said QR code on said target element;

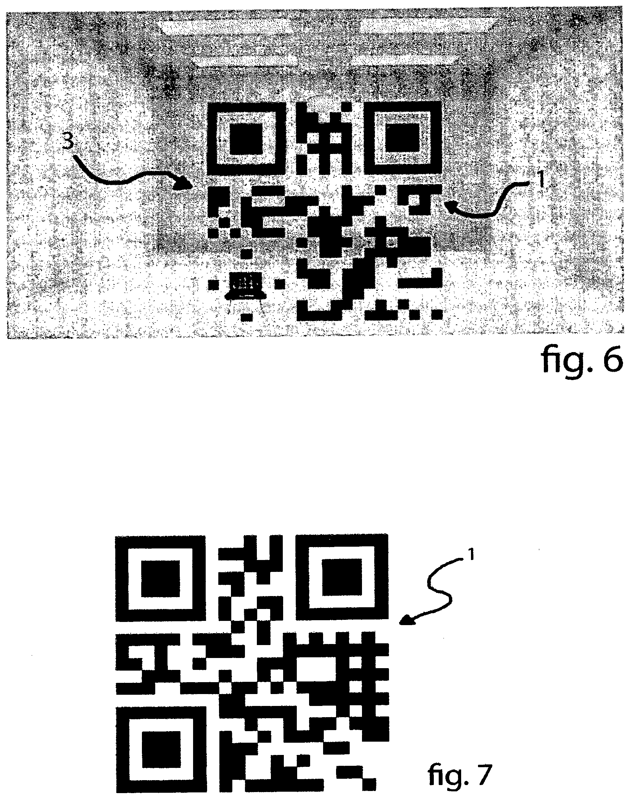

- Fig. 6 show the target element whereon said QR code is duplicated, placed in the space of fig. 2;
- Figs. 7 to 13 show the various steps of the procedure for duplicating a QR code on a target element, according to a second illustrative variant of the invention; more precisely, as shall be specified in detail hereinafter:
- Fig. 7 shows a QR code, representing the starting element of the procedure according to said second illustrative variant of the invention;

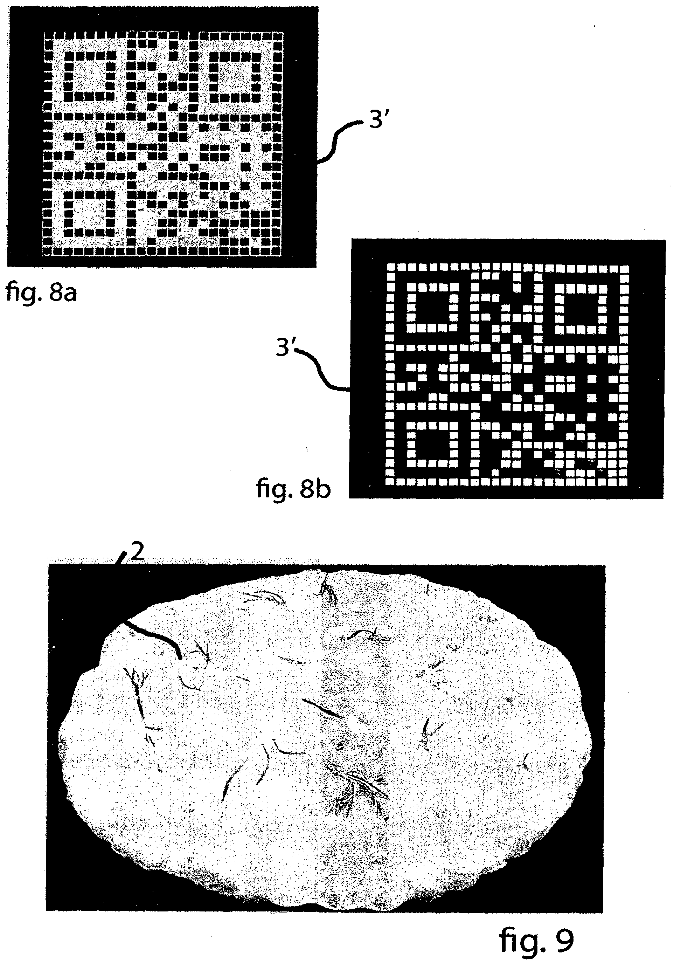

- Figs. 8a and 8b show an intermediate element for duplicating said QR code of fig. 7;
- Fig. 9 shows the (physical) space housing the target element whereon said QR code may be duplicated;

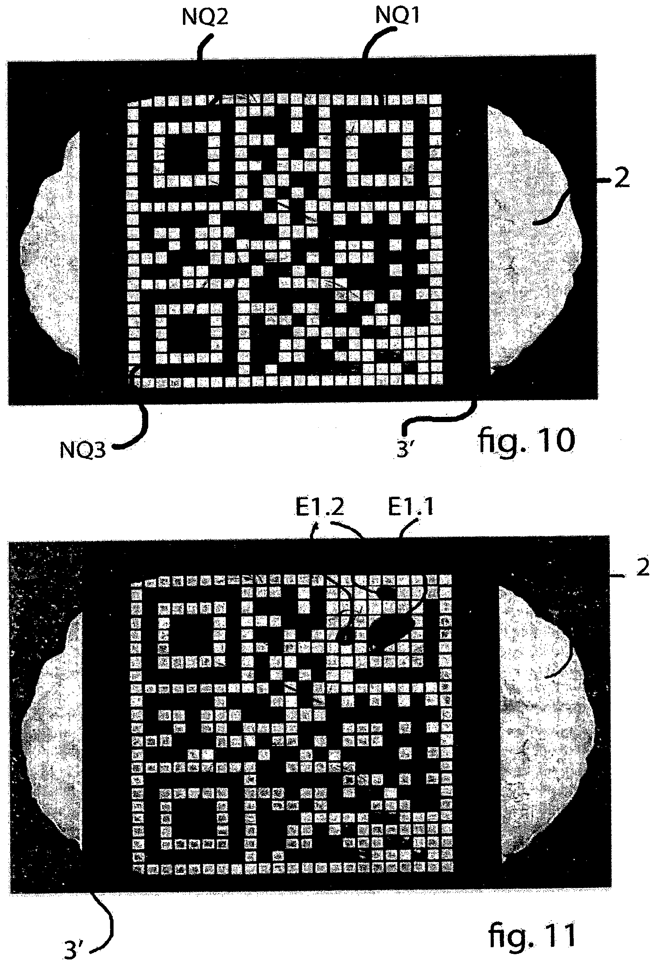

- Figs. 10 to 12 illustrate intermediate steps of the reconstruction/reprocessing procedure of said QR code on said target element through the intermediate element of figs. 8a or 8b;

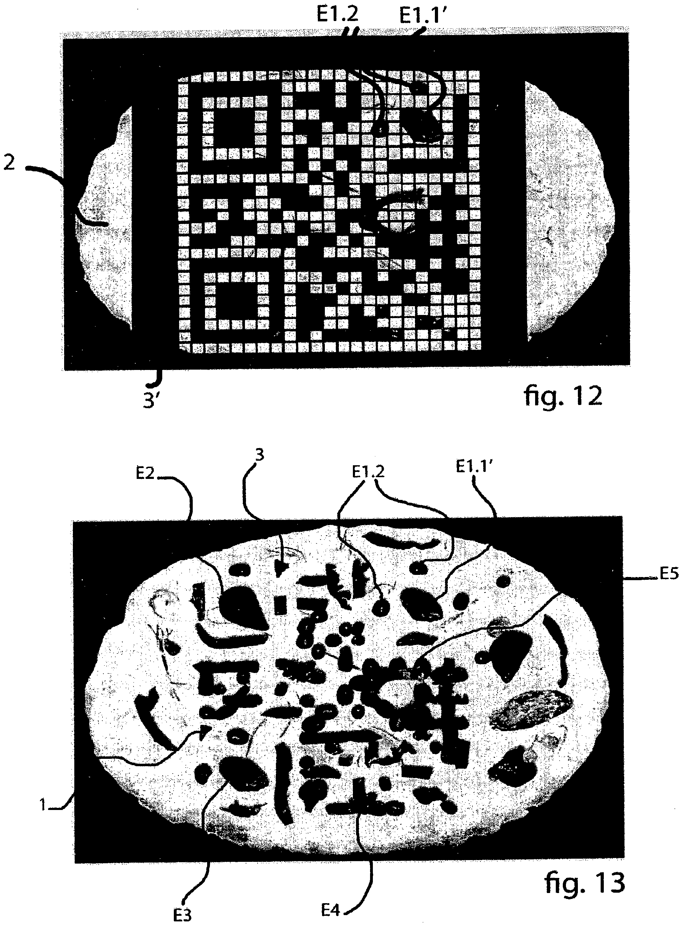

- Fig. 13 show the target element whereon said QR code is duplicated, placed in the space of fig. 7.

The features of the invention are now described using the references in the figures. It is noted that the above figures, although schematic, reproduce the various steps of the procedure and the system components in proportions between their dimensions and spatial orientations which are compatible with the possible embodiment of the variant shown in the same figures. It is also noted that any dimensional and spatial term (such as "lower", "upper", "inner", "outer", "front", "rear" and the like) refers to the position according to which the system elements are shown in the annexed figures, without any limiting intent relative to the possible operating conditions.

Hereinafter, the term "coded object" refers to the target element whereon the QR code is duplicated, where "target element", in turn, comprises any (physical or virtual) representation of an element having a predetermined spatially definable three-dimensional development.

More precisely the "coded object" according to the invention may be expressed both with virtual images and physical objects, and the latter both with elements directly constituting said coded object and elements that are preparatory to the subsequent generation of said coded object.

Said synthetic definitions will be clarified in greater detail in the description. According to a preferred embodiment, the procedure for duplicating a QR code on said coded object, is composed of a sequence of steps, which will be shortly progressively described hereinafter:
a) creation of the starting QR code;
b) implementation of the QR code in the three-dimensional space, shown with known display instruments;
c) duplication, through reconstruction or reprocessing, of the QR code on the coded object, placed in the three-dimensional space;
d) attainment of the final coded object.

Let's now describe in detail the single steps listed, with particular reference to the illustrative variants shown in the annexed figures.

### a) Creation of the QR code

As said, in fig. 1 reference 1 indicates a typical QR code, coding the desired content of the author, and created through one of the various free software for generating QR codes.

The QR 1 code has all the characteristics of a standard QR code, visually resolving in a two-dimensional matrix having square shape, wherein a series of black modules on a white background are arranged, according to the spatial arrangement resulting from the coding of the information contained in the QR code.

In conclusion, it is the succession of black modules and white background spaces (hereinafter, simply, "black code N" and "white code B") to make the QR code characterising: the information contained in the QR code, thus, gives life to a new unique matrix, which may not be obtained by coding different information; in short, each coded information produces a single and peculiar matrix of black code N and white code B and, vice versa, each QR code decodes for a single and unique information.

In common to each generated QR code is, instead, the presence of three large pointing squares, placed at the corner of the matrix: with the references NQ1, NQ2 and NQ3 said three pointing squares of black code N are shown, each comprising an external delimiting frame, wherein a square is placed.

They actually carry out the function of allowing the recognition of positioning and orientation of the QR code by the reading scanner, according to the reading procedure described in said prior patent EP 0672994.

Actually, thanks to the capability of correcting the QR code by the scanning software, it has been verified that it is possible to obtain a correct interpretation of the matrix even in cases where the outer delimiting frame of said pointing squares is partly missing or damaged, it being understood the performance of predetermined minimum requirements, which shall be explained hereinafter. Said possibility has practical relevance profiles in the implementation of the procedure of the present patent, particularly in the duplication step of the QR 1 code on the coded object.

### b) Implementation of the QR code in the three-dimensional space

Once the QR 1 code is generated, it is displayed on a screen by means of known display instruments, such as, for example, a monitor (analogic, digital, two or three-dimensional), a projection (analogic, digital or holographic) or other optical display.

With the same display instrument it is also shown on-screen the three-dimensional space, intended to receive the QR 1 code and the final coded object. Said three-dimensional space (for shortness hereinafter referred to as "S3D") may consist of a representative image of a real environment, filmed by video-photographic instruments, live, continuously or at a previous time; as an alternative, it may consist of a virtual environment, previously generated through information instruments for processing 2D images or 3D environments.

In the example of fig. 2, said S3D, indicated with reference numeral 2, consists of a room with substantially light colour walls and flooring.

Through any multilevel graphical processing software, the QR 1 code is applied on the representative image of said S3D 2, suitably subjected to adjustment of the contrast levels of black code N and to a removal operation of the white code B, as shown in fig. 3.

In the example shown, since the S3D 2 is representative of a substantially empty room, the positioning of said QR 1 code may be carried out in any area thereof, at user discretion.

On the other hand, if the S3D is an environment provided with (real or virtual) elements, spatially arranged in predetermined points thereof, it can be appropriate to place the QR 1 code in a specific area, that is according to the criteria of making one or more of said elements coincide, at least partly, with one or more portions of black code N or white code B of said QR 1 code.

However, as shall be explained hereinafter, said collimation requirement is absolutely not mandatory, due to the great possibility of manual or digital reprocessing and repositioning provided by the procedure of the present invention.

The adjustment actions of the QR 1 code contrast (and/or of the same image of the S3D 2, where necessary) and removal of the white code B of the QR 1 code, are aimed to an easier reconstruction and reprocessing step of the code in the S3D 2, in order to obtain the coded object OC.

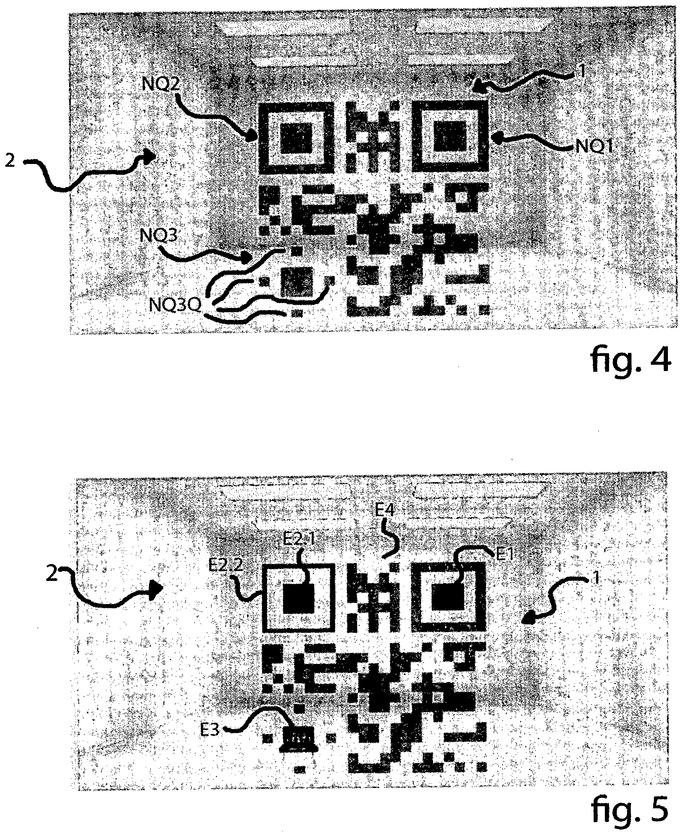

For the same reason it may be advisable to implement a change in the transparency degree of the black code N of the QR 1 code, in order to make partly visible the portions of the S3D 2, underlying the positioning level of said QR 1 code (see fig. 4).

### c) Duplication of the QR code on the coded object

Figs. 4 and 5 show the steps of the procedure for duplicating the QR 1 code, through the reconstruction and/or reprocessing thereof in the S3D 2, up to obtaining the coded object (hereinafter indicated in short with "OC").

As mentioned above, the error recognition and correction capabilities of a QR code up to about a 30% of wrong or damaged code, intrinsic of the reading and decoding software, allow a certain degree of modifiability of the black code N. In the black code N portions corresponding to the three pointing squares NQ1, NQ2 and NQ3, it is even possible to remove an even greater percentage of code, without affecting the recognition of positioning and orientation of the QR 1 code by the reading software.

It is instead not recommended to manipulate the QR 1 code portions at the vertical band underlying the pointing square NQ1 on top right, since said portion contains fundamental information for the correct recognition of the code and the orientation thereof.

Fig. 4 shows an example of deletion of N code portions in the outer delimiting frame of the pointing square NQ3, positioned in the lower left corner of the QR 1 code matrix: in order to keep its functionality, it is sufficient that only the four squares NQ3Q positioned at the vertical - horizontal symmetry axes of the pointing square NQ3 remain.

From this possibility of removing portions of black code N (associated to the automatic error correction system which has been often mentioned), without impairing the correct decoding of the QR 1 code, derives a considerable increase of freedom of the user for the reconstruction and duplication of said QR 1 code, in order to obtain the OC.

In fact, the procedure of the present invention continues with the selection and positioning of suitable three-dimensional elements, having specific shape and colour features, substituting predetermined black code N and white code B portions of the QR 1 code.

The example shown in fig. 5 serves to explain what just mentioned: in said figure, the pointing square NQ1 (on top right of the matrix) is replaced by the image of a television screen, having shape, dimension and colour comparable to that of the original black code N square.

The same applies for the other three-dimensional elements, arranged for replacing black code N and white code B portions, substantially similar to them by shape, dimension and colour (or, in other words, compatible with them from the viewpoint of decoding the QR 1 code, as explained hereinafter).

Therefore, an armchair E3 can be placed as a replacement of the pointing square NQ3, taking into account that the three-dimensional image thereof must be substantially and prospectively correspondent to that of the original pointing square, as well as the colour of the seat must be black or in any case sufficiently dark so that the scanning software recognises it as a portion of black code N. Likewise, the legs of said armchair must have a reduced thickness or sufficiently light colour, such that they are brought back within the portion of the white code B, and recognised as such in the next decoding step of code QR 1 duplicated on the OC.

In correspondence of the pointing square NQ2 (on top left of the matrix), the black code N square is replaced by an element E2.1, corresponding to a picture canvas.

Reference E4 shows a white chandelier (or in any case sufficiently light to be recognised as a portion of white code B by the QR code reading scanner), descending from the room ceiling representing the S3D 2 and placed in a portion of white code B of the QR 1 code.

The procedure for duplicating said QR 1 code may continue until its portions of black code N and white code B are fully replaced with other three-dimensional elements E1, E2, .... EN; for example, other elements compatible with the S3D 2 may consist in furniture, shelves, furnishings, vases or others, having such a shape, dimension and colour so as to be able to be positioned as a replacement for said black code N and white code B.

As an alternative, said reconstruction and reprocessing procedure may also stop after some allocation steps of the three-dimensional elements E1, E2, .... EN, without reaching the total replacement of the original QR 1 code: the choice is at user discretion and according to his will and imagination.

The discretion in the reprocessing of the QR 1 code is further increased by the already mentioned possibility of formal variation of the black code N portions and, as a result, of the three-dimensional elements E1, E2, .... EN to be placed for the substitution thereof.

Therefore, it is also possible to use three-dimensional elements E1, E2, .... EN having shapes not exactly matching with the black code N portions to be replaced, being able, for example, to use a three-dimensional element having spherical shape or curvilinear elements, which, correctly allocated, shall be in any case recognised as correct code if their variability falls within the percentage of error recognition, allowed by the scanner for decoding the QR code.

As seen, said procedure for duplicating the QR 1 code in the S3D 2, by replacing the two-dimensional code portions of said QR 1 code with suitable three-dimensional elements E1, E2, .... EN, envisages that each replacement is followed by the step of deletion of the replaced code portion, by means of manual or semi-automatic removal, on user confirmation, by the multilevel graphical processing software.

However this operation is associated to a continuous control step, in order to verify that the three-dimensional element replacing the QR 1 code portion is validly recognised as suitable (by shape, dimension and colour) to carry out the same decoding function, natively performed by the original QR 1 code portion replaced.

This verification is carried out by a system comprising the association of an additional software to the multilevel graphical processing software: said additional software consist of the QR code reading scanner, whose recursive operation allows checking continuously the correct arrangement of the three-dimensional elements E1, E2, .... EN in place of the native QR 1 code portions. Therefore, any time there is a replacement of a three-dimensional element E1, E2, .... EN to the portion of two-dimensional code of QR 1, the scanner ensures whether the partial OC (whereon said QR 1 code is being duplicated through the reconstruction/reprocessing thereof) is capable of correctly decoding the information initially coded in the starting QR 1 code.

In case said continuous verification gives a positive result, it is possible to proceed with the deletion of the black code N or white code B of the QR 1 code matrix, being certain that the replacing three-dimensional element E1, E2, .... EN is suitable to decode for the same content of said native QR 1 code.

Otherwise, instead, the deletion step of the replaced QR 1 code portion is not carried out, because the three-dimensional element E1, E2 .... EN that is used has been proved to be unsuitable for decoding for the same content of said native QR 1 code, since it is different by shape, dimension or colour relative to the black code N or white code B portion to be replaced, or because it is prospectively positioned incorrectly in the S3D 2.

In this second case, therefore, it is necessary to move back through the procedure until the step preceding the replacement of the QR 1 code portion with the three-dimensional element E1, E2, .... EN which revealed to be unsuitable (operation allowed by the graphical processing software in use, as well as in almost all software already known), in order to use a new three-dimensional element E1, E2, .... EN and proceed to its suitability check through the reading scanner.

In fact, the three-dimensional element placed may be too different (by shape, dimension and colour) from the replaced QR 1 code portion, to the point that the scanner error correction system is not sufficient to compensate such difference because the same error tolerance has been exceeded: in that case, the user understands that it is necessary to increase the compatibility of the three-dimensional element with said QR 1 code portion to be replaced, using a different three-dimensional element E1, E2, .... EN that is found to be more similar to the original code.

Thanks to this continuous control step, it is possible to test the OC in construction, step by step, and to notice immediately any error in the selection or positioning of the three-dimensional element in place of the QR 1 portion to be replaced.

In the example of fig. 5 the element E2.2, representing the canvas frame E2.1 and positioned as a replacement of the outer frame of the pointing square NQ2, is not an element suitable for being recognised by the scanner as decoding the same content of the QR 1 code, since its thickness is too small relative to the native black code N portion.

It is therefore necessary to use a different three-dimensional element E1, E2, .... EN or to thicken the element E2.2 originally used, so that the control system through the reading scanner gives the go-ahead to the replacement operation. The connection of the scanner to the system may be obtained in several ways: it is possible, for example, to position the scanner camera facing the screen that displays the S3D , the QR 1 code and the OC; or, in order to improve the visibility and operating convenience, it is possible to use a second video output and divert the content shown on a second screen, in front of which said reading scanner is to be placed.

The common QR code scanners already have a focus and light self-adjusting system, such that there are not any problems for said reading scanner to identify and decode the QR 1 code (native or modified as described above) shown on-screen.

However, it has been verified through empirical tests that it is preferable to place the scanner at a distance generally double relative to the dimension of the QR code to be detected, displayed on the screen. Due to the huge variations of perimeter detection of the QR code among different scanning software available in the industry, it is also advisable to carry out a preliminary positioning operation and a manual-visual adjustment during the first positioning of the scanner, in order to obtain the full functionality of the reading system.

### d) Attainment of the final coded object

The example of fig. 6 shows the OC 3 obtained from the procedure of reconstruction/reprocessing of the initial QR 1 code on the S3D 2.

Actually, the figure shows a partial progress in the attainment of the final OC 3 but, as mentioned above, the duplication of the QR 1 code may also stop after some allocation steps of the three-dimensional elements E1, E2, .... EN, without reaching the total replacement of the original QR 1 code.

The OC 3 obtained, once subject to reading by the scanner, decodes exactly the same information contained in the starting QR 1 code, although it is so different by exterior shapes from said QR 1 code to be virtually unrecognisable to the human eye.

The OC 3 resulting from the example shown in the annexed figures consists of a virtual image, consisting of the allocation of purely virtual elements.

Nevertheless, the same identical procedure may be implemented for obtaining an OC 3 through the correct positioning of physical elements present in one S3D 2 actually existing, wherein the arrangement of the three-dimensional elements E1, E2, .... EN in place of the relative QR 1 code portions does not take place through the on-screen graphical processing software (or, at least non only through it), but by means of physical movements and material adjustments of said elements actually available in the S3D 2.

In this case, in practice, the OC 3 consists of a real three-dimensional environment, suitably set up and directly decodable by the QR code reading scanner.

According to a variant of the present invention, there is also the possibility that the above-described procedure ends with the generation of an intermediate OC 3' which, although being per se already decodable by the QR code reading scanner, may actually be used as a shaped mask for the creation of a final OC 3, through reconstruction operations with really existing or actually constructible three-dimensional elements.

More precisely, said shaped mask, after its transformation into a physical object having dimensions suitable for the final OC 3 to be obtained, acts as a template for the subsequent material realisation of the OC 3, which as well decodes the correct information initially contained in the starting QR 1 code.

The realisation of said shaped mask into a physical object usable as a template, may be carried out through the association of the above described system to known instruments for typographic printing (also intaglio), three-dimensional printing (also by additive manufacturing), quick prototyping or sintering. As an alternative, said template may be materially constructed by manual or industrial operations.

The advantage of said embodiment variant with the template representing an intermediate OC 3', lies in its characteristics of tangible materiality and reusability over time, so as to be used for the serial and repeated attainment of final OC 3, that is for the mass production of OC 3, all decoding the same content of the starting QR 1 code.

While the steps of the above described procedure remain unchanged, it is obvious that the correct decodability of the final OC 3 resulting from this embodiment variant is ensured as far as possible when the starting QR 1 code applied on the S3D 2 is less subject to manipulation, that is when the intermediate OC 3' (represented by said template) is more similar to the starting QR 1 code.

For those reasons, in this particular variant, the procedure for duplicating the intermediate OC 3' may also stop during the initial steps, after only some modification operations of the two-dimensional matrix of the starting QR1 code or after few replacements of three-dimensional elements to the black code N or white code B; or the procedure may even stop at the end of the implementation step of said starting QR 1 code on the S3D 2, to proceed immediately to the attainment of the shaped mask for the subsequent physical realisation of the final OC 3.

Figures 7 to 13 chronologically show the different steps of the variant of the present invention wherein said intermediate OC 3' is used for obtaining the final OC 3.

Leaving unchanged the procedural steps previously described and shown in figs 1 to 6, it is hereinafter sufficient to focus only on the distinctive elements.

The starting step still consists of the creation of a QR 1 code, coding the desired content (fig. 7).

Subsequently, the implementation step of said QR 1 code in the S3D 2 and the duplication step is carried out, by means of the reconstruction and/or reprocessing thereof, to arrive to an intermediate OC 3' which, through suitable printing or manufacturing processes, materially consists of a template, acting as a shaped mask for creating the final OC 3.

In the specific case, said intermediate OC 3' is shown in figs 8a and 8b and is physically represented by a grid comprising a series of cells which, suitably left open (empty cells) or subject to closure (full cells) duplicate the two-dimensional matrix of the starting QR 1 code, identifying the white code B and black code N portions of said QR 1 code.

In conclusion, in said illustrative variant the intermediate OC 3' has been obtained immediately at the end of the implementation step of said starting QR 1 code on the S3D 2; but obviously said grid OC 3' may also be representative of the QR 1 code partly reconstructed/reprocessed after some allocation steps of three-dimensional elements E1, E2, .... EN in place of said black code N and white code B portion, always in accordance with the procedure described above. Once the realisation of said template (that is the intermediate OC 3') has been materially carried out, it can be used for the actual creation of the final OC 3. This tangible creation of the final OC 3 may be carried out using the intermediate OC 3' as a shaped mask for the correct positioning of the three-dimensional elements E1, E2, .... EN suitable for recreating the black code N and white code B on the underlying S3D 2, by means of known manual or semi-automatic allocation techniques.

Fig. 8a shows a variant of the intermediate OC 3' wherein the grid cells left open identify the black code N, while those closed identify the white code B of the QR 1 code.

In that case, in practice, said intermediate OC 3' acts as an actual template, guiding the user in the positioning of suitable three-dimensional elements for the correct duplication of the black code N on said S3D 2: the techniques that may be used are the most different, such as, for example, gravity positioning of the three-dimensional elements, or their duplication by spray or brush painting, always using the cells left open on said grid OC 3'.

With an intermediate OC 3' thus obtained, it is clear that it is preferable that the S3D 2 is an element with a white or substantially light coloured surface, so as to natively act as a white code B whereon the three-dimensional elements are arranged in place of the black code N portions: however, nothing prevents that the white code B portions may be recreated by difference or reprocessed directly on the S3D 2, once the three-dimensional elements decoding for the black code N have been positioned, with said intermediate OC 3' and with the above-mentioned techniques.

Vice versa, in case the intermediate OC 3' consists of a template whose grid has cells left open identifying the white code B and closed cells identifying the black code N (as shown in the example of fig. 8b), it is preferable that the S3D 2 is an element with a dark surface, since with said OC 3' the white code B portions of the QR 1 code are recreated.

Whichever the intermediate OC 3' used is, the possibility remains of applying the next control and verification steps (through the scanner reading system described above), in order to ensure that the three-dimensional element replacing the QR 1 code portion is validly recognised as suitable (by shape, dimension and colour) to carry out the same decoding function, natively performed by the original QR 1code portion replaced.

Nevertheless it should be noted that said continuous control step may also be redundant and have only an additional function of mere assessment of attainment of the desired decoding, because the recreation of the final OC 3 is in any case performed with the aid of the intermediate OC 3', which has already successfully passed said verification steps and it is already certain that it decodes correctly for the same content of the starting QR 1 code.

However, in the event that the final OC 3 consists of an object (for example of the culinary sector) the three-dimensional elements thereof have particularly variable and aleatory peculiarities which, despite the use of the correct intermediate OC 3', may result in uncertain or incorrect decoding, then it is possible to proceed with the replication of the continuous control steps during the duplication of the QR 1 code on the S3D 2, always in accordance with the procedure and system of the present invention.

Figs. 9 to 13 show the steps of the procedure for duplicating the QR 1 code, through the reconstruction and/or reprocessing thereof in the S3D 2 thanks to the aid of the intermediate OC 3' and with the continuous control allowed by the system comprising the QR code reading scanner..

Specifically, the intermediate OC 3' consists of the template shown in fig. 8b, while the S3D2 is represented by a pizza dough (fig. 9), whereon said OC 3' is implemented (fig. 10).

The user provides for the selection and positioning of the suitable three-dimensional elements E1, E2, .... EN, which, always with particular reference to the case shown in the figures, replace the black code N portions of the intermediate OC 3' (herein represented by the closed cells of the template grid), which can then be removed if the scanner recognises said three-dimensional elements as suitable for decoding the initial QR 1 code.

On account of the concrete materiality of the intermediate OC 3', "removal of the replaced black code N portions" should mean that the closed cells of the grid are physically converted into open cells, so that the template may show the back S3D2 and allow the scanner to read the OC 3 in construction and to verify the correct decodability thereof.

To this end, in the particular variant in which said template OC 3' consists of a grid, it is obvious that it can be envisaged that its cells may be variably left open or subject to closure, so that a single grid is capable to act as a material support for duplicating the multiple templates OC 3', according to the succession of said open and closed cells replicating several starting QR 1.

Fig. 11 shows how the pointing square NQ1 is reconstructed on the S3D 2 by means of a couple of olives E 1.2 and a mussel E1.1; in fig. 12 it can be seen how this last three-dimensional element E1.1 has been replaced by a slice of salami E1.1', because the verification through scanner has detected the unsuitability of said mussel E1.1 to replace the black code N portion, unlike said slice of salami E1.1' which is, instead, able to be validly recognised as a tree-dimensional element suitable for decoding the same content of the QR 1 code.

The reconstruction procedure of the starting QR 1 code, shown in the intermediate OC 3' and thanks to this, on the target S3D 2, can continue up to obtaining the final OC 3, in this case represented by the pizza shown in fig. 13. Duly garnished with ingredients suitable for acting as three-dimensional elements replacing the respective portions of the starting QR 1 code, said final OC 3 decodes exactly the same information contained in said QR 1, once it is subject to reading by the scanner according to the particular perspective inclination set out at the beginning of the duplication procedure.

The objects and advantages that may be achieved appear clearly from the description of the procedure and apparatus just described.

The present invention exceeds the physical two-dimensional limits of the graphics representing the starting QR 1 code, to extend to the huge three-dimensional perspective, both physical and virtual, so as to allow unlimited variations, only limited by the artistic creativity and imagination of the OC 3 creator.

The procedure and system, object of the present invention, allow the easy replication of some types of three-dimensional environments, which may be identified in specific objects of the most various nature, including those of artistic figurative, culinary, mechanical, building, architectural type, and others. With the present invention, in practice, it is possible to obtain OC 3, even not recognisable at first sight by the human eye because of the perspective inclination to be used, but correctly decodable by the QR code scanner, once the right axonometric reading perspective is given (that is the same perspective by which said QR 1 code has been implemented in the S3D 2).

In other words, said OC 3 can be embodied in a three-dimensional element which is visually different from the starting QR 1 code and, for that reason, not easily identifiable as such by the human eye; however it is absolutely capable to decode the same information contained in said QR 1, when subject to reading in accordance with the suitable parameters used for its implementation in the S3D 2 (that is, with the same criteria in terms of distance, depth and perspective axonometry).

This allows creating OC 3 showing in physical or virtual environments which decode the most various contents: mimetic messages, surprising advertising spots, visual and multimedia meta-works relating the visual and pictorial-sculptural arts to those of other nature, advertising pictures, etc.

This prerogative of the OC 3 containing the starting QR 1 code not being easily recognisable by the human eye is further amplified by the possibility that between said OC 3 and QR 1 there is a considerable exterior difference, up to the point that one may not be easily associated to the other (even where the human eye is able to to identify a code from it, an event that, as said, is not at all expected but obviously possible).

More precisely, thanks to the procedure for duplicating the QR 1 for obtaining the OC 3 described in the present invention and to the correction capability of the scanning software, the OC 3 may be without a certain percentage of code portions, especially in the areas corresponding to the pointing squares NQ1, NQ2 and NQ3 (the external frames whereof may also limit to keep the vertical and horizontal symmetry points), so as to considerably differentiate it from the starting QR 1 code: once again it should be noted that said visual discrepancy relates exclusively to the exterior shape of the OC 3 relative to said starting QR 1, while the essential characteristic that the OC 3 still decodes the identical information contained in the starting QR 1 remains unaffected.

It is clear that several variants of the procedure and system for duplicating the QR 1 code on the OC 3, described above, are possible to the man skilled in the art, without departing from the novelty scopes of the inventive idea, as well as it is clear that in the practical embodiment of the invention, the various components described above may be replaced with technically equivalent ones. For example, in the demonstration variants described above, reference has always been made to the reprocessing/reconstruction of the QR 1 code in the SD3 2 for obtaining the OC 3 through manual or semi-automatic operations, that is by means of the correct perspective positioning of the three-dimensional elements E1, E2, .... EN, through material movements of physical objects in a real setup environment or through movements of incorporeal objects in a virtual environment with the graphical processing software.

However, it may also be provided a completely automated variant, wherein the same graphical processing software is related to software for managing, creating and/or selecting three-dimensional elements E1, E2, .... EN more suitable for being replaced to the QR 1 code portions to be replaced, always in accordance with the above-mentioned shape, dimension and colour compatibility criteria. Or said completely automated variant may be obtained by means of a suitable additional software that instructs a robotic clamp, or similar instruments, to select and place correctly said three-dimensional elements in the S3D 2.

With reference to the colour requirement of the three-dimensional element replacing a predetermined portion of black code N or white code B of the two-dimensional matrix of the starting QR 1 code, it should be underlined that said colour must not be necessarily white or black, but simply attributable to the two categories of black code N or white code B by the scanning software.

Therefore, it shall be possible to use (real or virtual) three-dimensional elements having a wide variety of chromaticities, such as paints (applied to real three-dimensional elements) reactive to UV light or sensitive to frequency spectrums which may be even invisible to the human eye, suitable for highlighting autofluorescence characteristics or revealing if and when loaded with natural or artificial light of suitable frequency: the fundamental principle is that the colours of said three-dimensional elements E1, E2, .... EN are interpreted as white or black by the scanner (in other words one colour range is interpreted as "white", while the remaining range is interpreted as "black") and the three-dimensional element is correctly allocated as a replacement of the respective portion of black code N and white code B of the QR 1 code, being all checks carried out by the above-described procedure and system.

In the variant wherein a template is used having the function of intermediate OC 3' for the creation of the final OC 3, it may be provided that said template consists of a sheet pre-printed through a cutting plotter, according to the intaglio typographic printing technology.

In this case, said intermediate OC 3' may be directly pasted or juxtaposed to the S3D 2 and its diecuts to act as area whereon the correct three-dimensional elements may be placed (with the many different techniques above, such as painting, manual decoration, gravity positioning, brush or spray application, etc.) in place of the respective portions of white code B or black code N of the QR 1 code.

As the reproduction of said QR 1 code is carried out, the intermediate OC 3' is increasingly removed for the relative part already duplicated, always and only if the three-dimensional element used has successfully passed the verification test through the scanner.

A further variant of intermediate OC 3' may be represented by the projection of a template on the S3D 2 (or back-projection, in case said S3D 2 consists of cloth, curtains, semi-transparent lamps, plexiglass, various fabrics, usually materials with a certain degree of transparency; or, again, micro-projection in case said S3D 2 has very small dimensions): said OC 3' always acts as a template indicating the physical areas whereon the various portions of black code N and white code B of the original QR1 code can be duplicated, by means of the known techniques already described.

It must be underlined that in the above-described variants wherein a template is used with the function of intermediate OC 3' for obtaining the final OC 3, reference has always been made to a template having dimensions substantially similar to those of said OC 3, on the basis that it is juxtaposable or in any case approachable in close proximity with S3D 2.

However, this option could not be possible, due to physical impediments which impede the approach of the intermediate OC 3' to the S3D 2: it will be therefore necessary to place the template at a greater distance from said S3D 2, by suitably scaling down the dimensions of the same template and the relevant portions of white code B and black code N (that is the relevant cells, in the example of the grid of the annexed figures), according to the common rules of optics and perspective, so that it continues to act as a suitable shaped mask for obtaining the final OC 3.

The same applies in case the scanner and the video-photographic instrument must be placed further for the on-screen display of the S3D2 and the OC 3', it being understood the need for a preliminary operation of positioning and a manual-visual adjustment of said means, in order to obtain full functionality of the reading system.

## Claims

1. A procedure for duplicating a Quick Response QR code (1) on a target element for obtaining a coded three-dimensional object OC (3; 3'), comprising:
- an initial step of writing of said code QR (1), adapted to code the desired content into the two-dimensional matrix representative of said QR code (1),
**characterised in that**
it further comprises at least the following steps, subsequent to said initial writing step:
- implementing said QR code (1) in a three-dimensional space S3D (2), adapted to house said target element,
- duplicating said QR code (1) on said target element, up to obtaining said OC (3; 3'),
- reading said OC (3; 3'), for decoding said same desired content, coded in said QR code (1), when read according to the same axonometric perspective by which said QR code (1) has been implemented in said S3D (2),
and **in that**
said step of duplicating said QR code (1) on said target element comprises at least the following steps:
- reconstructing and/or reprocessing said QR code (1) in said S3D (2) through sequential activities of selection and positioning of suitable three-dimensional elements (E1, E2, ... EN) as a replacement of predetermined black code (N) or white code (B) portions of said QR code (1),
said three-dimensional elements (E1, E2, ... EN) having such shape, dimension and colour features as to be decoded as compatible and prospectively correspondent with said predetermined black code (N) or white code (B) portions replaced, so that the decoding of the OC (3; 3') provides the same content coded in said QR code (1),
- removing said black code (N) or white code (B) portions at the end of each of said sequential activities of selection and positioning of said three-dimensional elements (E1, E2, ... EN), provided that said three-dimensional elements (E1, E2, ... EN) are effectively recognised as suitable, said suitability assessment operating continuously during each of said sequential activities,
- obtaining said OC (3; 3'), consisting of said target element on which said QR code (1) is reconstructed and/or reprocessed in the S3D (2).

2. A procedure for duplicating a QR code (1) according to the previous claim,
**characterised in that**
said step of implementing said QR code (1) in the S3D (2) comprises at least the following steps:
- representing said S3D (2) on a screen,
- positioning the image of said QR code (1) on said representation of the S3D (2),
- removing the white code (B) portions from said image of said QR code (1).

3. A procedure for duplicating a QR code (1) according to the previous claim,
**characterised in that**
said step of implementing said QR code (1) in the S3D (2) further comprises the following step:
- modifying the transparency degree of the black code (N) portions of said QR code (1), so as to make the zones of said S3D (2) underlying said black code (N) portions more visible.

4. A procedure for duplicating a QR code (1) according to any one of the previous claims,
**characterised in that**
said step of duplicating said QR code (1) on the target element further comprises the following step:
- modifying and/or partly removing black code (N) or white code (B) portions of said QR code (1) prior to said sequential activities of selection and positioning of suitable three-dimensional elements (E1, E2, ... EN) as a replacement of said portions, provided that said suitability assessment continuously checks that the OC (3; 3') decoding provides the same content coded in said QR code (1), said modification and/or partial removal being still comprised within the error tolerance threshold of the reading system.

5. A procedure for duplicating a QR code (1) according to any one of claims 1 to 4,
**characterised in that**
said sequential activities of selection and positioning of suitable three-dimensional elements (E1, E2, ... EN) as a replacement of predetermined black code (N) or white code (B) portions of said QR code (1) for obtaining said OC (3; 3') continue up to the complete replacement of said black code (N) or white code (B) portions.

6. A procedure for duplicating a QR code (1) according to any one of claims 1 to 4,
**characterised in that**
said replacement of predetermined black code (N) or white code (B) portions of said QR code (1) for obtaining said OC (3; 3') is partial, said sequential activities of selection and positioning of suitable three-dimensional elements (E1, E2, ... EN) as a replacement of predetermined portions interrupting after one or more of said activities.

7. A procedure for duplicating a QR code (1) according to any one of claims 1 to 6,
**characterised in that**
said OC (3; 3') obtained is a final OC (3) directly capable of being subjected to reading for decoding.

8. A procedure for duplicating a QR code (1) according to any one of claims 1 to 6,
**characterised in that**
said OC (3; 3') obtained is an intermediate OC (3') adapted to act as a template for obtaining a final OC (3) to be subjected to reading for decoding.

9. A procedure for duplicating a QR code (1) according to claim 2 or 3,
**characterised in that**
said attainment of said OC (3; 3') takes place right after the step of implementing said QR code (1) in the S3D (2) housing said target element, without sequential activities of selection and positioning of suitable three-dimensional elements (E1, E2, ... EN) as a replacement of predetermined black code (N) or white code (B) portions of said QR code (1), said OC (3; 3') being an intermediate OC (3'), adapted to act as a template for obtaining a final OC (3) to be subjected to reading for decoding.

10. A procedure for duplicating a QR code (1) according to any one of claims 7 to 9,
**characterised in that**
said step of reading the OC (3; 3') obtained comprises at least the following step:
- subjecting said OC (3; 3') to reading through a dedicated scanning means, said scanning means having to be positioned according to the correct axonometric reading perspective selected during the implementation step of said QR code (1) in the S3D (2).

11. Coded object OC (3; 3') obtained according to the procedure of claims 1 to 10, **characterised in that**
it consists of a three-dimensional target element on which a Quick Response QR code (1) is reconstructed and/or reprocessed in a three-dimensional space S3D (2),
said OC (3; 3') comprising one or more three-dimensional elements (E1, E2, ... EN) placed in replacement of predetermined black code (N) or white code (B) portions of said QR code (1),
said three-dimensional elements ((E1, E2, ... EN) having such shape, dimension and colour features as to be decoded as to be compatible and prospectively correspondent with said predetermined black code (N) or white code (B) portions replaced,
said OC (3; 3') being a final OC (3) directly capable of being subjected to reading for decoding the same content coded in said QR code (1).

12. Coded object OC (3; 3') obtained according to the procedure of claims 1 to 10, **characterised in that**
it consists of a three-dimensional target element on which a Quick Response QR code (1) is reconstructed and/or reprocessed in a three-dimensional space S3D (2),
said OC (3; 3') comprising one or more three-dimensional elements (E1, E2, ... EN) placed in replacement of predetermined black code (N) or white code (B) portions of said QR code (1),
said three-dimensional elements ((E1, E2, ... EN) having such shape, dimension and colour features as to be decoded as to be compatible and prospectively correspondent with said predetermined black code (N) or white code (B) portions replaced,
said OC (3, 3') being an intermediate OC (3') adapted to act as a template for obtaining a final OC (3) to be subjected to reading for decoding the same content coded in said QR code (1).

## Patentansprüche

1. Verfahren zum Duplizieren eines Quick-Response-(QR-)Codes (1) auf einem Zielelement zum Erhalten eines codierten dreidimensionalen Objekts OC (3; 3'), umfassend:
- einen ersten Schritt des Schreibens des QR-Codes (1), der geeignet ist, den gewünschten Inhalt in die zweidimensionale Matrix zu codieren, die für den QR-Code (1) repräsentativ ist,
**dadurch gekennzeichnet, dass**
es ferner nach dem ersten Schritt des Schreibens mindestens die folgenden Schritte aufweist:
- Implementieren des QR-Codes (1) in einem dreidimensionalen Raum S3D (2), der geeignet ist, das Zielelement aufzunehmen,
- Duplizieren des QR-Codes (1) auf dem Zielelement bis zum Erhalten des OC (3; 3'),
- Lesen des OC (3; 3') zum Decodieren des gleichen gewünschten Inhalts, der in dem QR-Code (1) codiert wird, wenn er nach der gleichen axonometrischen Perspektive gelesen wird, mit der der QR-Code (1) in dem S3D (2) implementiert worden ist,
und dass
der Schritt des Duplizierens des QR-Codes (1) auf dem Zielelement mindestens die folgenden Schritte aufweist:
- Rekonstruieren und/oder Aufbereiten des QR-Codes (1) in dem S3D (2) durch sequentielle Aktivitäten des Auswählens und Positionierens von geeigneten dreidimensionalen Elementen (E1, E2, ... EN) als Ersatz für vorbestimmte schwarze (N) oder weiße (B) Abschnitte des QR-Codes (1),
wobei die dreidimensionalen Elemente (E1, E2, ... EN) derartige Form-, Abmessungs- und Farbeigenschaften aufweisen, dass sie als mit den vorbestimmten ausgetauschten schwarzen (N) oder weißen (B) Codeabschnitten kompatibel oder diesen voraussichtlich entsprechend decodiert werden, so dass das Decodieren des OC (3; 3') den gleichen Inhalt bereitstellt, der in dem QR-Code (1) codiert wird,
- Entfernen der schwarzen (N) oder weißen (B) Codeabschnitte am Ende von jeder der sequentiellen Aktivitäten des Auswählens und Positionierens der dreidimensionalen Elemente (E1, E2, ... EN), vorausgesetzt, dass die dreidimensionalen Elemente (E1, E2, ... EN) tatsächlich als geeignet erkannt werden, wobei die Beurteilung der Eignung kontinuierlich während jeder der sequentiellen Aktivitäten durchgeführt wird,
- Erhalten des OC (3; 3'), der aus dem Zielelement besteht, auf dem der QR-Code (1) in dem S3D (2) rekonstruiert und/oder aufbereitet wird.

2. Ein Verfahren zum Duplizieren eines QR-Codes (1) nach dem vorhergehenden Anspruch,
**dadurch gekennzeichnet, dass**
der Schritt des Implementierens des QR-Codes (1) in dem S3D (2) mindestens die folgenden Schritte aufweist:
- Darstellen des S3D (2) auf einem Bildschirm,
- Positionieren des Bildes des QR-Codes (1) auf der Darstellung des S3D (2),
- Entfernen der weißen (B) Codeabschnitte von dem Bild des QR-Codes (1).

3. Ein Verfahren zum Duplizieren eines QR-Codes (1) nach dem vorhergehenden Anspruch,
**dadurch gekennzeichnet, dass**
der Schritt des Implementieren des QR-Codes (1) in dem S3D (2) ferner den folgenden Schritt aufweist:
- Modifizieren des Transparenzgrads der schwarzen (N) Codeabschnitte des QR-Codes (1), um die Bereiche des S3D (2), die den schwarzen (N) Codebschnitten zugrunde liegen, sichtbarer zu machen.

4. Ein Verfahren zum Duplizieren eines QR-Codes (1) nach einem der vorhergehenden Ansprüche,
**dadurch gekennzeichnet, dass**
der Schritt des Duplizierens des QR-Codes (1) auf dem Zielelement ferner den folgenden Schritt aufweist:
- Modifizieren und/oder teilweises Entfernen der schwarzen (N) oder weißen (B) Codeabschnitte des QR-Codes (1) vor den sequentielle Aktivitäten des Auswählens und Positionierens von geeigneten dreidimensionalen Elementen (E1, E2, ... EN) als Ersatz für die Abschnitte,
vorausgesetzt, dass die Beurteilung der Eignung kontinuierlich überprüft, dass das Decodieren des OC (3; 3') denselben Inhalt bereitstellt, der in dem QR-Code (1) codiert wird, wobei das Modifizieren und/oder teilweise Entfernen noch innerhalb der Fehlertoleranzschwelle des Lesesystems liegt.

5. Ein Verfahren zum Duplizieren eines QR-Codes (1) nach einem der Ansprüche 1 bis 4,
**dadurch gekennzeichnet, dass**
die sequentiellen Aktivitäten des Auswählens und Positionierens von geeigneten dreidimensionalen Elementen (E1, E2, ... EN) als Ersatz für vorbestimmte schwarze (N) oder weiße (B) Codeabschnitte des QR-Codes (1) zum Erhalten des OC (3; 3') bis zum vollständigen Ersetzen der schwarzen (N) oder weißen (B) Codeabschnitte fortgesetzt werden.

6. Ein Verfahren zum Duplizieren eines QR-Codes (1) nach einem der Ansprüche 1 bis 4,
**dadurch gekennzeichnet, dass**
das Ersetzen der schwarzen (N) oder weißen (B) Codeabschnitte des QR-Codes (1) zum Erhalten des OC (3; 3') partiell ist, wobei die sequentiellen Aktivitäten des Auswählens und Positionierens von geeigneten dreidimensionalen Elementen (E1, E2, ... EN) als Ersatz für die vorbestimmten Abschnitte nach einer oder mehreren der Aktivitäten unterbrochen wird.

7. Ein Verfahren zum Duplizieren eines QR-Codes (1) nach einem der Ansprüche 1 bis 6,
**dadurch gekennzeichnet, dass**
das OC (3; 3') ein endgültiges OC (3) ist, das direkt dem Lesen zum Decodieren unterworfen werden kann.

8. Ein Verfahren zum Duplizieren eines QR-Codes (1) nach einem der Ansprüche 1 bis 6,
**dadurch gekennzeichnet, dass**
das erhaltene OC (3; 3') ein intermediäres OC (3') ist, das geeignet ist, als Vorlage zu fungieren, um ein endgültiges OC (3) zu erhalten, das dem Lesen zum Decodieren unterworfen werden kann.

9. Ein Verfahren zum Duplizieren eines QR-Codes (1) nach Anspruch 2 oder 3,
**dadurch gekennzeichnet, dass**
das Erreichen des OC (3; 3') gleich nach dem Schritt des Implementierens des QR-Codes (1) in dem S3D (2), der das Zielelement aufnimmt, ohne sequentielle Aktivitäten des Auswählens und Positionierens von geeigneten dreidimensionalen Elementen (E1, E2, ... EN) als Ersatz für vorbestimmte schwarze (N) oder weiße (B) Codebschnitte des QR-Codes (1) stattfindet, wobei das OC (3; 3') ein intermediäres OC (3') ist, das geeignet ist, als Vorlage zu fungieren, um ein endgültiges OC (3) zu erhalten, das dem Lesen zum Decodieren unterworfen werden kann.

10. Ein Verfahren zum Duplizieren eines QR-Codes (1) nach einem der Ansprüche 7 bis 9,
**dadurch gekennzeichnet, dass**
der Schritt des Lesens des erhaltenen OC (3; 3') mindestens die folgenden Schritte aufweist:
- Unterwerfen des OC (3; 3') dem Lesen durch ein dediziertes Scanmittel, wobei das Scanmittel nach der korrekten axonometrischen Perspektive angeordnet werden muss, die während des Schrittes des Implementierens des QR-Code (1) in dem S3D (2) ausgewählt wird.

11. Codiertes Objekt (3; 3'), das nach dem Verfahren von den Ansprüchen 1 bis 10 erhalten ist, **dadurch gekennzeichnet, dass**
es aus einem dreidimensionalen Zielelement besteht, auf dem ein Quick-Response-(QR-)Code (1) in einem dreidimensionalen Raum S3D (2) rekonstruiert und/oder aufbereitet ist,
wobei das OC (3; 3') eines oder mehrere dreidimensionale Elemente (E1, E2, ... EN) aufweist, die als Ersatz für vorbestimmte schwarze (N) oder weiße (B) Codeabschnitte des QR-Codes (1) angeordnet sind,
wobei die dreidimensionalen Elemente (E1, E2, ... EN) derartige Form-, Abmessungs- und Farbeigenschaften aufweisen, dass sie als mit den vorbestimmten ausgetauschten schwarzen (N) oder weißen (B) Codeabschnitten kompatibel und diesen voraussichtlich entsprechend decodiert werden,
wobei das OC (3; 3') ein endgültiges OC (3) ist, das direkt dem Lesen zum Decodieren des gleichen Inhalts, der in dem QR-Code (1) codiert ist, unterworfen werden kann.

12. Codiertes Objekt (3; 3'), das nach dem Verfahren von den Ansprüchen 1 bis 10 erhalten ist, **dadurch gekennzeichnet, dass**
es aus einem dreidimensionalen Zielelement besteht, auf dem ein Quick-Response-(QR-)Code (1) in einem dreidimensionalen Raum S3D (2) rekonstruiert und/oder aufbereitet ist,
wobei das OC (3; 3') eines oder mehrere dreidimensionale Elemente (E1, E2, ... EN) aufweist, die als Ersatz für vorbestimmte schwarze (N) oder weiße (B) Codeabschnitte des QR-Codes (1) angeordnet sind,
wobei die dreidimensionalen Elemente (E1, E2, ... EN) derartige Form-, Abmessungs- und Farbeigenschaften aufweisen, dass sie als mit den vorbestimmten ausgetauschten schwarzen (N) oder weißen (B) Codeabschnitten kompatibel und diesen voraussichtlich entsprechend decodiert werden,
wobei das erhaltene OC (3, 3') ein intermediäres OC (3') ist, das geeignet ist, als Vorlage zu fungieren, um ein endgültiges OC (3) zu erhalten, das dem Lesen zum Decodieren des gleichen Inhalts, der in dem QR-Code (1) codiert ist, unterworfen werden kann.

## Revendications

1. Une procédure pour dupliquer un code QR de réponse rapide (1) sur un élément cible pour obtenir un objet tridimensionnel codé OC (3; 3'), comprenant :
- une première étape d'écriture dudit code QR (1), adaptée pour coder le contenu souhaité dans la matrice bidimensionnelle représentative dudit code QR (1),
**caractérisée en ce que**
elle comprend en outre au moins les étapes suivantes, après ladite étape d'écriture initiale :
- la mise en oeuvre dudit code QR (1) dans un espace tridimensionnel S3D (2), adapté pour loger ledit élément cible,
- la duplication dudit code QR (1) sur ledit élément cible, jusqu'à l'obtention dudit OC (3; 3'),
- lire ledit OC (3; 3'), pour décoder ledit même contenu désiré, codé dans ledit code QR (1), lorsqu'il est lu selon la même perspective axonométrique par lequel ledit code QR (1) a été implémenté dans ledit S3D (2),
et **en ce que**
ladite étape de duplication dudit code QR (1) sur ledit élément cible comprend au moins les étapes suivantes :
- reconstruire et/ou retraiter ledit code QR (1) dans ledit S3D (2) à travers des activités séquentielles de sélection et de positionnement d'éléments tridimensionnels appropriés (E1, E2, ... EN) en remplacement d'un code noir prédéterminé (N) ou des parties de code blanc (B) dudit code QR (1),
lesdits éléments tridimensionnels (E1, E2, ... EN) ayant des caractéristiques de forme, de dimension et de couleur pour être décodées comme compatibles et éventuellement correspondantes avec lesdites parties prédéterminées de code noir (N) ou de code blanc (B) remplacées, de sorte que le décodage du OC (3; 3') fournit le même contenu codé dans ledit code QR (1),
- supprimer lesdites parties du code noir (N) ou du code blanc (B) à la fin de chacune desdites activités séquentielles de sélection et de positionnement desdits éléments tridimensionnels (E1, E2, ... EN), à condition que lesdits éléments tridimensionnels (E1, E2, ... EN) sont effectivement reconnus comme appropriés, ladite évaluation d'adéquation fonctionnant en continu pendant chacune desdites activités séquentielles, obtenant ledit OC (3; 3'), constitué dudit élément cible sur lequel ledit code QR (1) est reconstruit et/ou retraité dans le S3D (2).

2. Une procédure de duplication d'un code QR (1) selon la revendication précédente,
**caractérisée en ce que**
ladite étape consistant à mettre en oeuvre ledit code QR (1) dans le S3D (2) comprend au moins les étapes suivantes :
- représentant ledit S3D (2) sur un écran,
- positionner l'image dudit code QR (1) sur ladite représentation du S3D (2),
- supprimer les parties de code blanc (B) de ladite image dudit code QR (1).

3. Une procédure de duplication d'un code QR (1) selon la revendication précédente,
**caractérisée en ce que**
ladite étape consistant à mettre en oeuvre ledit code QR (1) dans le S3D (2) comprend en outre l'étape suivante :
- modifier le degré de transparence des parties de code noir (N) dudit code QR (1), de manière à rendre les zones dudit S3D (2) sous-jacentes auxdites parties de code noir (N) plus visibles.

4. Une procédure de duplication d'un code QR (1) selon l'une quelconque des revendications précédentes,
**caractérisée en ce que**
ladite étape de duplication dudit code QR (1) sur l'élément cible comprend en outre l'étape suivante :
- modifier et/ou supprimer partiellement les parties du code noir (N) ou du code blanc (B) dudit code QR (1) avant les activités séquentielles de sélection et de positionnement des éléments tridimensionnels appropriés (E1, E2, ... EN) comme un remplacement desdites parties, à condition que ladite évaluation de l'adéquation vérifie en permanence que le décodage OC (3; 3') fournit le même contenu codé dans ledit code QR (1), ladite modification et/ou suppression partielle étant toujours comprise dans la tolérance d'erreur seuil du système de lecture.

5. Une procédure de duplication d'un code QR (1) selon l'une quelconque des revendications 1 à 4,
**caractérisée en ce que**
lesdites activités séquentielles de sélection et le positionnement des éléments tridimensionnels appropriés (E1, E2, ... FR) en tant que remplacement des parties du code noir (N) ou code blanc (B) prédéterminées dudit code QR (1) pour l'obtention dudit OC (3; 3') continuent jusqu'au remplacement complet desdites parties du code noir (N) ou du code blanc (B).

6. Une procédure de duplication d'un code QR (1) selon l'une quelconque des revendications 1 à 4,
**caractérisée en ce que**
ledit remplacement desdites parties du code noir (N) ou du code blanc (B) prédéterminés dudit code QR (1) pour obtenir ledit OC (3; 3') est partiel, lesdites activités séquentielles de sélection et de positionnement des éléments tridimensionnels appropriés (E1, E2, ... EN) en tant que remplacement de parties prédéterminées interrompant après une ou plusieurs desdites activités.

7. Une procédure de duplication d'un code QR (1) selon l'une quelconque des revendications 1 à 6,
**caractérisée en ce que**
ledit OC (3; 3') obtenu est un OC final (3) directement capable d'être soumis à la lecture pour le décodage.

8. Une procédure de duplication d'un code QR (1) selon l'une quelconque des revendications 1 à 6,
**caractérisée en ce que**
ledit OC (3; 3') obtenu est un OC intermédiaire (3') adapté pour servir de modèle pour obtenir un OC final (3) à soumettre à la lecture pour le décodage.

9. Une procédure de duplication d'un code QR (1) selon la revendication 2 ou 3,
**caractérisée en ce que**
ladite réalisation dudit OC (3; 3') a lieu juste après l'étape consistant à mettre en oeuvre ledit code QR (1) dans le S3D (2) abritant ledit élément cible, sans activités séquentielles de sélection et de positionnement des éléments tridimensionnels appropriés (E1, E2, ... EN) en tant que remplacement desdites parties du code noir (N) ou du code blanc (B) prédéterminées dudit code QR (1), ledit OC (3; 3') étant un OC intermédiaire (3'), adapté pour servir de modèle pour obtenir un OC final (3) à soumettre à la lecture pour le décodage.

10. Une procédure de duplication d'un code QR (1) selon l'une quelconque des revendications 7 à 9,
**caractérisée en ce que**
ladite étape de lecture du OC (3; 3') obtenue comprend au moins l'étape suivante :
- soumettre ledit OC (3; 3') à lire à travers un moyen de balayage dédié, lesdits moyens de balayage devant être positionnés selon la perspective de lecture axonométrique correcte sélectionnée pendant l'étape de mise en oeuvre dudit code QR (1) dans le S3D (2).

11. Objet codé OC (3; 3') obtenu selon la procédure des revendications 1 à 10, **caractérisé en ce que**
il se compose d'un élément cible tridimensionnel sur lequel un code QR de réponse rapide (1) est reconstruit et/ou retraité dans un espace tridimensionnel S3D (2),
ledit OC (3; 3') comprenant un ou plusieurs éléments tridimensionnels (E1, E2, ... EN) placés en remplacement des parties du code noir (N) ou du code blanc (B) prédéterminées dudit code QR (1),
lesdits éléments tridimensionnels (E1, E2, ... EN) ayant des caractéristiques de forme, de dimension et de couleur qui doivent être décodées pour être compatibles et correspondre de manière prospective avec lesdites parties prédéterminées de code noir (N) ou de code blanc (B) remplacées,
ledit OC (3; 3') étant un OC final (3) directement capable d'être soumis à la lecture pour décoder le même contenu codé dans ledit code QR (1).

12. Objet codé OC (3 ; 3') obtenu selon la procédure des revendications 1 à 10, **caractérisé en ce que**
il se compose d'un élément cible tridimensionnel sur lequel un code QR de réponse rapide (1) est reconstruit et/ou retraité dans un espace tridimensionnel S3D (2),
ledit OC (3 ; 3') comprenant un ou plusieurs éléments tridimensionnels (E1, E2, ... EN) placés en remplacement des parties du code noir (N) ou du code blanc (B) prédéterminées dudit code QR (1),
lesdits éléments tridimensionnels (E1, E2, ... EN) ayant des caractéristiques de forme, de dimension et de couleur qui doivent être décodées pour être compatibles et correspondre de manière prospective avec lesdites parties prédéterminées de code noir (N) ou de code blanc (B) remplacées,
ledit OC (3, 3') étant un OC intermédiaire (3') adapté pour servir de modèle pour obtenir un OC final (3) à soumettre à la lecture pour le décodage du même contenu codé dans ledit code QR (1).
